## Europäisches Patentamt

## European Patent Office

## Office européen des brevets

(19)

(11) Veröffentlichungsnummer: **0 215 080**
**B1**

(12) # EUROPÄISCHE PATENTSCHRIFT

(45) Veröffentlichungstag der Patentschrift:
21.06.89

(51) Int. Cl.⁴: **G 01 G 11/14**, G 01 G 11/00,
G 01 G 13/18

(21) Anmeldenummer: 86901871.3

(22) Anmeldetag: 27.03.86

(86) Internationale Anmeldenummer:
PCT/EP 86/00187

(87) Internationale Veröffentlichungsnummer:
WO 86/05875 (09.10.86 Gazette 86/22)

(54) **VORRICHTUNG ZUM AUTOMATISCHEN ERFASSEN EINES KONTINUIERLICHEN SCHÜTTGUTDURCHSATZES MITTELS EINER DURCHLAUFWAAGE.**

(30) Priorität: 04.04.85 CH 1485/85

(43) Veröffentlichungstag der Anmeldung:
25.03.87 Patentblatt 87/13

(45) Bekanntmachung des Hinweises auf die Patenterteilung:
21.06.89 Patentblatt 89/25

(84) Benannte Vertragsstaaten:
AT BE CH DE FR GB IT LI NL SE

(56) Entgegenhaltungen:
EP-A-0 140 213
WO-A-85/01577
FR-A-2 384 246
FR-A-2 456 344
FR-A-2 532 748
GB-A-2 113 856
US-A-3 853 190

Engineering, vol. 223, no. 10, October 1983, London (GB), "Electronically-controlled hopper copes with sticky materials"

(73) Patentinhaber: Gebrüder Bühler AG, CH- 9240 Uzwil (CH)

(72) Erfinder: GMÜR, Bruno, Boppartstr. 32, CH- 9014 St. Gallen (CH)
Erfinder: KÜHNEMUND, Bernd, Primelweg 4, CH- 9230 Flawil (CH)

(74) Vertreter: EGLI- EUROPEAN PATENT ATTORNEYS, Widenmayerstrasse 5, D-8000 München 22 (DE)

## Beschreibung

### Technisches Gebiet

Die Erfindung bezieht sich auf eine Schüttgutdurchlaufwaage zum automatischen Erfassen eines kontinuierlichen Schüttgutdurchsatzes mit einem Wagegefäß, mit einem im Auslaufbereich des Wägegefäßes angeordneten und mit ihm verbundenen Verschlußorgan, mit einer Steuereinrichtung, mittels welcher das Verschlußorgan in eine das Wägegefäß verschließende und in eine Offenstellung bringbar ist, und mit an das Wägegefäß angeschlossenen Gewichts- oder Gewichtsdifferenz-Erfassungmitteln.

Die Erfindung bezieht sich auch auf ein Verfahren zum automatischen Erfassen eines Schüttgutdurchsatzes mittels einer Schüttgutdurchlaufwaage, die ein an Gewichts- oder Gewichtsdifferenz-Erfassungsmittel angeschlossenes Wägegefäß, ein im Auslaufbereich des Wägegefäßes angeordnetes und mit ihm verbundenes Verschlussorgan und eine Steuereinrichtung zur Steuerung der Arbeitsstellung des Verschlußorganes aufweist.

### Stand der Technik

In der CH-A-557 060 (GEBR. BÜHLER) sind ein Verfahren und eine Vorrichtung für die automatische Erfassung eines Schüttgutstromes beschrieben. Der Kerngedanke, der bei diesem Stand der Technik Anwendung findet, baut im wesentlichen auf der Ablenkwirkung einer Stoß- oder Ablenkplatte (Prallplatte) auf. Wird nämlich fallender Schüttgutstrom von einer in seine Fallinie eingesetzten Stoß- oder Prallplatte abgelenkt, so wirkt auf diese Platte ein Impuls. Die Impulskraft ist abhängig von der Fallhöhe des jeweils momentanen Schüttgutdurchsatzes und wird ferner beeinflußt durch Lage und Form sowie Reibverhalten der Platte, insbesondere aber auch durch das Schüttgutverhalten. Weitere Einflußparameter sind Produktgranulation, Fließverhalten, Luft und Produkt-Feuchtigkeit, Temperatur usw. Bereits aus dieser Aufzählung ist ersichtlich, daß für eine kontinuierliche Erfassung des Massestromes des fließenden Produktes sehr komplexe Zusammenhänge wirksam sind, so konstruktiv einfach auch die eingesetzte Stoßplatte an sich ist. Praktisch lösbar waren die auftretenden Problemstellungen nur dadurch, daß gewisse Rahmenbedingungen als unveränderliche Größen angenommen werden mußten. So lag eine erste Einschränkung darin, daß das Ablenkplatten-System nur für wirklich frei fließfähiges Gut wie Getreidekörner einsetzbar ist. Der Produktstrom muß durch geometrisch konstante Verhältnisse geführt sein. Theoretisch ist es denkbar, die von der Meßplatte festgestellte Impulskraft für die Ermittlung eines Schüttgutdurchsatzes heranzuziehen.

Es hat sich jedoch gezeigt, daß als praktikabler Weg allein die Verwendung der Horizontalkomponente der Impulskraft sinnvoll ist, wie dies z. B. in der DE-C-2 609 167 (GEBR BÜHLER) als Weiterentwicklung der erstgenannten CH-A-557 060 beschrieben ist.

Die Vertikalkomponente der Impulskraft, also die "Gewichtskomponente", wird bei dieser Art Meßplattensystem durch entsprechende gelenkige Abstützungen für die Meßwerterfassung ausgeschaltet. Die horizontale Auslenkung bzw. die entsprechende Horizontalkomponente aus dem Zusammenspiel des fallenden Schüttgutstromes und der Ablenkplatte kann auf diese Weise als Meßwert für die automatische Erfassung des Durchsatzes des Schüttgutstromes verwendet werden.

Unter Laborbedingungen kann mit dieser Methode ohne weiteres eine Meßgenauigkeit von +/- 0,5 % in der Praxis in sehr vielen Fällen von +/- 1 % realisiert werden. Bei schwierigen Bedingungen sind aber vereinzelt doch auch größere Abweichungen festgestellt worden. Demgegenüber ist es üblich, entsprechende Schüttwaagen-Genauigkeiten von +/- 0,1 % regelmäßig zu garantieren.

In allen Fällen, in denen Waagegenauigkeit verlangt wird, werden jedoch nach wie vor Waagen eingesetzt, obwohl diese gerade nicht einen kontinuierlichen Schüttgutstrom vermessen können, sondern für die Verwägung den Produktstrom unterbrechen müssen, wie etwa aus der US-A-3 853 190 (DELESDERNIER) bekannte Waage. Waagen sind überdies nicht nur teurer als die Systeme mit Ablenkplatten, sondern bedingen häufig auch Ausgleichselemente, um nach derm Waagenbehälter einen kontinuierlichen Produktfluß zu erhalten. Bandwaagen mit großer Genauigkeit sind noch teurer als Behälterwaagen und erreichen doch regelmäßig die Genauigkeit der Behälterwaagen nicht.

Bei den gegenwärtig zu beobachtenden intensiven Automatisierungsbestrebungen, insbesondere bei Mühlenbetrieben, kommen mehr und mehr zwei Sachverhalte in den Vordergrund, nämlich:

1. der Produktfluß soll eine möglichst große Kontinuität mit nur minimalen Schwankungen aufweisen;

2. der Durchsatz des kontinuierlichen Produktflusses soll angenähert mit Waagengenauigkeit erfaßt werden können.

In neuer Zeit werden häufig sogenannte Differenzwaagen eingesetzt, wie dies z. B. in der FR-A-2 456 344 (HASLER FRERES) oder FR-A-2 384 246 (RHONE-POULENC IND.) gezeigt ist. Die Differenzwaage besteht aus einem Wägebehälter mit gesteuerter Produktaustragung in Form einer mit dem Ausgang des Wägebehälters verbundenen, geschwindigkeitssteuerbaren Förderschnecke sowie aus einer vom Wägebehälter gesteuerten Dosiereinrichtung für die Produktzufuhr. Dabei wird die von der Produktaustragung abgeförderte Gutmenge in erster Linie durch Messung des laufenden Gewichtsverlustes des Wägebehälters ermittelt. Die Meßresultate sind an und für sich sehr genau. Ein Nachteil bei den bekannten Differenzwaagen besteht jedoch darin, daß eine regelmäßige Abfolge zwischen Füllung und Leerung eingehalten werden muß. Zwar kann dabei auch während der Füllung ausgetragen werden, jedoch mit dem Nachteil, daß während der Füllphase die Meßwerte der Waage durch den einfallenden Produktstrom an sich gestört und unbrauchbar sind, wie bei der FR-A-2 384 246. Zur Lösung dieses Problems schlägt die FR-A-2 456 344 vor, im Wägebehälter drei vertikal übereinander angeordnete Guträume vorzusehen. Dabei verjüngen sich der oberste und der unterste Gutraum jeweils trichterförmig nach unten zu einem Auslaß. Der Auslaß des obersten Gutraumes mündet in einen mittleren Gutraum und der Auslaß des untersten Gutraumes unmittelbar in die Austrags-Förderschnecke. Weiterhin ist der Wägebehälter mit einem Schließorgan für den Auslaß des obersten Gutraumes bestückt. Dieses Schließorgan ist mittels eines von den Gewichtsänderungsmeßwerten abhängigen Signals in eine Schließstellung oder in eine Offenstellung bringbar. Während der Füllphase wird das Schließorgan in seine Schließstellung gebracht und hierdurch das dem Wägebehälter zugeführte Gut daran gehindert, in den untersten Gutraum zu fallen und die Austragsleistung der Förderschnecke zu beeinflussen. Gleichzeitig wird in dieser Phase die Austrags-Förderschnecke ausschließlich nach einem volumetrischen Durchsatz gesteuert. Dabei gemessene Gewichts- oder Gewichtsänderungsmeßwerte sind jedoch unbrauchbar. Im übrigen sind ein Raum oberhalb des Wägebehälters und der Ausgang der Förderschnecke über ein Entlüftungsrohr miteinander verbunden.

Bei der Brennstoffspeisung von z. B. Feuerungsanlagen spielt die Genauigkeit eine weniger große Rolle als z. B. bei der Verarbeitung von Nahrungsmitteln in Mühlenanlagen, insbesondere bei der Erfassung des Durchsatzes eines Getreidestromes z. B, zum gleichzeitigen genauen Zudosieren der fehlenden Wassermenge oder für die Speisung und teilweise Regelung von Verarbeitungsmaschinen.

Als weiteres Problem in Mühlen kommt die Mischung verschiedener Getreidesorten hinzu. Hieran wurden bislang keine besonders hohen Anforderungen gestellt. Bei der Verwendung von Computern zur Steuerung des ganzen Produktflusses hat sich dies jedoch geändert, weil die verarbeitete Produktmenge exakt erfaßt werden muß, da sonst über größere Zeiträume große Abweichungen zwischen den tatsächlich vorhandenen Getreidemengen in den einzelnen Lagerzellen und der durch ungenaue Messung aufaddierten falschen Daten entstehen könnten.

Entsprechend der Anzahl Speicherzellen bzw. Produktläufe werden eine große Anzahl Durchsatz-Meßstellen benötigt, so daß die Verwendung von teuren Wägesystemen wegen der erforderlichen großen Anzahl wirtschaftlich nicht tragbar ist.

Aus der GB-A-2 113 856 (UTVECKLING AB TECCON) sind eine Vorrichtung und ein Verfahren zur Ermittelung des Durchsatzes eines Gutes an Hand des Gutes Milch näher beschrieben. Dabei wird die Milch kontinuierlich einem Vorbehälter zur Vergleichmäßigung der Zuströmrate zugeführt und von diesem kontinuierlich einem nachgeschalteten Durchlaufwägebehälter zugeleitet. Der Ausgang des Wägebehälters wird mittels eines steuerbaren Verschlußorganes abwechselnd geöffnet und geschlossen. Die Wägung findet in der Schließstellung, also in der Füllphase statt. In dieser Phase wird kontinuierlich gemessen, und zwar die Gewichts-Zuwachsrate der einströmenden Milch. Die so gewonnen Werte werden dazu verwendet, auf den Milchdurchsatz durch das Wägegefäß in seiner Offenstellung zu extrapolieren. Die sich aus den gemessenen und aus den extrapolierten Werten ergebenden Kurvenstücke werden aneinandergereiht und ergeben somit die Gesamtmeßkurve, aus welcher dann der Gesamtdurchsatz ermittelt wird.

Die ältere, aber nachveröffentlichte EP-A-0 140 213 (GEBR. BÜHLER) beschreibt die im Gattungsteil des Haupt-Vorrichtungsanspruches und des Haupt-Verfahrensanspruches vorliegender Erfindung angegebenen Merkmale. Bei dieser EP-Druckschrift sind das Wägegefäß, ein Zuführleitungsabschnitt und ein Abführleitungsabschnitt jeweils im Abstand von einander angeordnet und dabei jeweils untereinander als im wesentlichen querschnittsgleiche, rohrförmige Förderleitungsabschnitte ausgebildet, die, wie in einer Förderleitung, fluchtend aufeinander ausgerichtet sind. Dabei verbinden ein Druckausgleichsrohr den Abführleitungsabschnitt und den Zuführleitungsabschnitt miteinander und flexible Manschetten das Wägegefäß mit den Zu- und Abführleitungsabschnitten. Das Wägegefäß stützt sich auf elektronischen Gewichtserfassungmitteln ab. Mit dieser Vorrichtung ist eine exakte Gewichtserfassung eines kontinuierlichen Schüttgutstromes möglich. Hierzu wird der Schüttgutstrom ohne Unterbrechung in das rohrförmige Wägegefäß bei geschlossenem Verschlußorgan eingeleitet. In dieser Füllphase wird die Gewichtszunahme pro Zeiteinheit dadurch erfasst, daß in vorgebenen Zeitabständen punktuell Einzelgewichtsmessungen vorgenommen werden, die Differenz der so gemessenen Werte ermittelt und durch das Zeitintervall zwischen den Meßwerten dividiert wird.

Die Erfindung geht von der Aufgabe aus, eine Vorrichtung mit den im Oberbegriff des Patentanspruchs 1 angegebenen Merkmalen und ein Verfahren mit den im Oberbegriff des Patentanspruches 9 angegebenen Merkmalen dahingehend weiterzubilden, daß zusätzlich zum chargenweisen Verwiegen auch ein Verwiegen im kontinuierlichen Betrieb bei offenem Wägegefäß ermöglicht wird.

Diese Aufgabe wird in vorrichtungsmäßiger Hinsicht dadurch gelöst, daß die Steuereinrichtung und das Verschlußorgan derart ausgebildet und angeordnet sind, daß das Verschlußorgan in den Austrittsquerschnitt des Auslaufbereiches des Wägeabschnittes bestimmende Arbeitsstellungen bringbar ist, in welchen sich ein kontinuierlicher Schüttgutstrom in Form eines Massenflusses innerhalb des Wägegefäßes aufrechterhalten läßt.

In verfahrensmäßiger Hinsicht wird die vorgenannte Aufgabe dadurch gelöst, daß im Wägegefäß ein kontinuierlicher Schüttgutstrom in Form eines Massenflusses aufrechterhalten und dabei Gewichte- oder Gewichtsdifferenzen gemessen werden.

Mit der erfindungsgemäßen Lösung wird die Genauigkeit von Präzisonswaagen erreicht, wobei jedoch deren bauliche Abmessung im Bereich der bekannten Ablenkplattensysteme liegt.

Hierbei wird unter dem Ausdruck "Massenfluß" das Auftreten einer geschlossenen, frei fließenden Schüttgutsäule, sei in einem Rohr oder in einem Silo bzw. Siloauslaß verstanden. Es ist das Verdienst der Erfindung, erkannt zu haben, daß dem Zusammenspiel von Schüttgut und Wägegefäß eine ganz wesentliche Bedeutung für die Meßgenauigkeit der Gesamtvorrichtung zukommt.

Beobachtet man z. B. eine Sanduhr, so zeigt sich gute Regelmäßigkeit des Produktabflusses. Vom recht genauen Zeitzyklus für das Abfließen wurde der Schluß gezogen, der Sand bzw. ein Schüttgut verhalte sich gleich wie eine Flüssigkeit. In der Praxis bewiesen jedoch viele schlecht oder nicht-fließende Trichter, daß Schüttguter ganz anderen Gesetzen als Flüssigkeiten gehorchen.

Die Erfindung nützt die bei Siloanlagen seit einiger Zeit bekannte und auch praktizierte Technik der Auslaufdimensionierung. In der Silotechnik unterscheidet man zwei grundsätzlich verschiedene Ausfließverhalten, nämlich

1. den Kernfluß, sowie
2. den Massefluß.

Beim "Kernfluß" strömt effektiv nur das Schüttgut aus, das sich in der Kernzone befindet, so daß bei schlechter fließenden Schüttgütern (z. B. Mehl) in der Mitte des Siloquerschnitts ein zylindriches Loch entsteht, das sich über die ganze Höhe der Silofüllung hinweg erstreckt. Das Produkt strömt bei diesem Fall unregelmäßig nach, trotzdem wird regelmäßig bei Kernfluß eine größere Austragleistung als bei Massenfluß festgestellt. Denn bei "Massenfluß" bewegt sich beim Austragen die ganze Schüttgutmenge im Silo nach unten. Die Erfindung hat nun erkannt, daß für das Fließverhalten der meisten frei fließfähigen Schüttgüter dann optimale Bedingungen erreicht werden können, wenn ein Massenfluß erzeugt wird und dieser frei und unbehindert aus dem Wägegefäß austreten kann. Dadurch bleibt der Massenstrom im Wägegefäß im Normalbetrieb stets in Bewegung und es muß nicht ständig die Zone der Ruhe und der Bewegungsreibung durchfahren werden. Auch Beschleunigungen und Verzögerungen im Bereich des austretenden Massenstromes stören nicht mehr, da der gesamte Produktstrom entlang der Wand gleitet und dieser Widerstand geringer als der im Inneren des Produktes ist.

Die bekannten Differentialwaagen verwenden üblicherweise mechanische Zwangsaustragsmittel wie Schneckenförderer oder Schleusen, die durch Veränderung der Drehzahl auf eine genaue Dosierleistung geregelt werden können. Dadurch wird im Wägegefäß ein Rückstau erzeugt. Das Produkt tritt erst aus dem Zwangsfördermittel frei aus.

In vorteilhafter Ausgestaltung der erfindungsgemäßen Vorrichtung ist das Verschlußorgan wenigstens als ein im Auslaßbereich des Wägegefäßes als Klappe oder Schieber ausgebildeter Wandteil ausgeführt. Vorzugsweise werden dabei Schieber bzw. Klappe so angeordnet, daß zu den ihnen gegenüberliegenden Wandteilen für den Betrieb der Vorrichtung ein Öffnungswinkel von 0° bis 40°, ganz besonders bevorzugt von 20° bis 35°, einstellbar ist.

Eine weitere ganz besonders bevorzugte Ausgestaltung der erfindungsgemäßen Vorrichtung besteht auch darin, daß dem Verschlußorgan, etwa der Klappe oder dem Schieber, steuerbare Verstellmittel sowie Positions-Anzeigemittel zugeordnet werden. Für zahlreiche Anwendungsfälle ist es auch vorteilhaft, wenn der Durchlaufwaage ein Grobdosier-Organ, das von der Durchlaufwaage steuerbar ist, zugeordnet wird. Ganz besonders bevorzugt weist dieses Grobdosierorgan zumindest im Bereich seines Produktauslasses einen freien Massenfluß auf. Dies hat den Vorteil, daß auch der Zulauf zum Durchlaufwägegefäß gleichmäßig erfolgen kann. Bei weniger leicht fließfähigen Gütern kann die Grobdosierung auch z. B. aus einem Schleusen- oder aus einem Schneckendosierer bestehen.

Die Erfindung ermöglicht es erstmals, zwei völlig unterschiedliche Betriebszustände meßtechnisch zu erfassen und, wie später noch gezeigt wird, gleichzeitig sogar noch - falls gewünscht - das Zufließen und das Abfließen zu überwachen oder das Zufließen und das Abfließen getrennt meßtechnisch zu erfassen. Damit ist erstmals eine echte Kontrollstelle innerhalb eines kontinuierlichen Produktflusses möglich, wobei gleichzeitig auf den momentanen Produktdurchsatz Einfluß genommen werden kann. Je nach Bedarf kann der Produktzulauf oder der Produktablauf gesteuert oder geregelt werden.

Versuche haben gezeigt, daß der letzte Auslaufvorgang (wenn also die Reste des Produktes aus der Waage ausfließen) keinen genauen Massenfluß mehr ergibt, so daß bevorzugt ein Drittel bis ein Viertel Füllung des Wägegefäßes für die Meßwertgewinnung nicht unterschritten werden sollte. Es ist ferner möglich, die Erfindung selbst dann einzusetzen, wenn das Schüttgut nicht eine einheitliche Dichtigkeit, Feuchtigkeit usw. aufweist. Ganz besonders vorteilhaft ist es dabei, wenn die Meßwerte in einem Bereich teilweiser und ganzer Füllung des Durchlaufwägegefäßes ermittelt werden.

In einer großen Anzahl von Anwendungsfällen ist es besonders vorteilhaft, wenn das Signal eingesetzt wird zur Steuerung der Produktzufuhr zum Wägegefäß. Hierdurch kann die in das Wägegefäß zulaufende Schüttgutmenge aufgrund der Meßwerte des Wägegefäßes "grob" geregelt werden, während der Durchsatz im Bereich des frei austretenden Massenstromes exakt regelbar ist. Auf der Zulaufseite kann somit irgendein Grobdosiergerät, z. B. eine Dosierschleuse oder ein einfacher Schieber eingesetzt werden. Der grobe Produktstrom wird so geregelt, daß im Wägegefäß eine minimale bzw. maximale Füllhöhe nicht unter- bzw. überschritten wird. Das Wägegefäß selbst wird dabei als eine Art "Feinregelgerät" für den Durchsatz eingesetzt, soferne ein vorgegebener Durchsatz-Sollwert geregelt werden muß.

Sind beim Schüttgut Veränderungen in den Fließeigenschaften vorhanden und zwar solche, die den Massenfluß beeinflussen, wie etwa Schüttdichte, Feuchtigkeit, verschiedene Mischungsanteile usw., so wird vorzugsweise die dem Wägegefäß zulaufende Schüttgutmenge zu Kontrollzwecken in Zeitabständen unterbrochen und dabei die pro Zeiteinheit erfolgende Gewichtsabnahme des Waageninhaltes festgestellt, um so die pro Zeiteinheit ausfließende Schüttgutmenge zu ermitteln. Damit lassen sich exakte Meßwerte für den tatsächlichen Durchsatz bzw. die tatsächliche Schüttgutmenge, die ausfließt und weiter in den Produktionsprozeß gegeben wird, ungestört von dem in das Wägegefäß einfließenden Produkt ermitteln. Man kann dies so einrichten, daß man z. B. die Istwerte in kg/sec. des ausfließenden Schüttgutes oder entsprechend für eine gewünschte Zeitspanne die durchströmende Produktmenge erhält.

Für die Speisung nachfolgender Verarbeitungsmaschinen ist es besonders vorteilhaft, wenn beim Auftreten kurzfristiger Schwankungen der in das Wägegefäß zulaufenden Schüttgutmenge eine Regelung der ausfließenden Schüttgutmenge derart erfolgt, daß das Wägegefäß durch wechselnde Füllung als Ausgleichsgefäß und "Brecher" momentan auftretender Veränderungen, z. B. Spitzen, wirksam ist.

Ganz besonders bevorzugt läßt sich das abgeleitete Signal auch z. B. zur Regelung, etwa zur prozentualen Zudosierung eines zweiten Schüttgutstromes oder einer mit dem ersten Schüttgut zu mischenden Flüssigkomponente einsetzen. Soferne das Produkt zur Bildung eines freien Massenstromes geeignet ist, kann auf dieselbe Weise das Signal mit Vorteil auch zur Steuerung einer nachfolgenden Verarbeitungsmaschine, etwa zur Steuerung der von dieser abgegebenen Durchsatzleistung, eingesetzt werden.

Bei einer weiteren, vorteilhaften Ausgestaltung des erfindungsgemäßen Verfahrens wird kurzzeitig der Massenfluß im Wägegefäß gestoppt oder die Austrittsöffnung des Wägegefäßes geschlossen und dabei die pro Zeiteinheit erfolgende Gewichtszunahme der in das Wägegefäß zulaufenden Schüttgutmenge festgestellt. Hierbei sind zwei Fälle möglich: beim Beginn des Produktflusses kann auf diese Weise sehr exakt die in das Wägegefäß eingespeiste momentane Schüttgutmenge sofort ermittelt werden, um z. B. eine Grobdosierung zu steuern. Es kann aber auch bei Bedarf oder in bestimmten Zeitabständen die genaue in das Wägegefäß geförderte Produktmenge festgestellt werden. Vorteilhafterweise wird dabei ein Teil des Inhaltes des Mägegefäßes kurzfristig abgelassen, der Massenfluß gestoppt bzw. die Austrittsöffnung des Mägegefäßes verschlossen und, wie im ersten Fall, aufgrund des pro Zeiteinheit erfolgenden Gewichtsanstiegs der Produktzufluß exakt ermittelt.

Aus den vorstehenden Ausführungen ergibt sich, daß nahezu jede beliebige Kombination innerhalb der verschiedenen Ausgestaltungsmöglichkeiten für die Erfindung gegeben ist, je nach den besonderen Bedingungen, die erfüllt werden sollen. Als solche Bedingungen können z. B. die bestmögliche Vergleichmäßigung des Produktflusses, eine exakte Regelung des Durchsatzes aufgrund eines vorgegebenen Sollwertes, das Erfassen von jeweils exakten Momentanwerten für eine proportionale Beimischung einer anderen Komponente (etwa Netzung von Getreide), eine exakte Erfassung einer Schüttgutmenge über einen größeren Zeitraum hinweg usw. mit der Erfindung überraschend einfach und genau gelöst werden. Es lassen sich auch weitere Kombinationen vornehmen, so etwa eine erste grobe Regelung des Produktstroms durch einen steuerbaren Dosierer und eine nachfolgende Exaktmessung nach der Erfindung o. ä.

So wird bei einer weiteren, ganz besonders bevorzugten Ausgestaltung des erfindungsgemäßen Verfahrens kurzzeitig der Massenfluß des Wägegefäßes in einem zweiten Wägegefäß aufgefangen und in diesem die pro Zeiteinheit erfolgende Gewichtszunahme festgestellt und aus den Meßwerten des ersten und des zweiten Wägegefäßes die in das erste Mägegefäß zulaufende Schüttgutmenge bzw. die aus ihm austretende Schüttgutmenge festgestellt bzw. ermittelt.

## Kurze Beschreibung der Zeichnungen

Die Erfindung wird nachfolgend anhand der Figuren beispielshalber noch näher erläutert. Es zeigen:

Figur 1. ein erfindungsgemäßes Durchsatzmeßgerät;

Figur 2. ein Beispiel des Verlaufs des Waagensignales bei einem Meßgerät nach Figur 1;

Figur 3. ein anderes erfindungsgemäßes Durchsatzmeßgerät mit Grobsteuerung des zufließenden Produkts;

Figur 4. ein Beispiel für den Verlauf eines Waagensignales bei einem Gerät nach Figur 3, und

Figur 5. ein weiteres Beispiel für ein erfindungsgemäßes Durchsatzmeß- und -regelgerät.

## Ausführliche Beschreibung der Zeichnungen

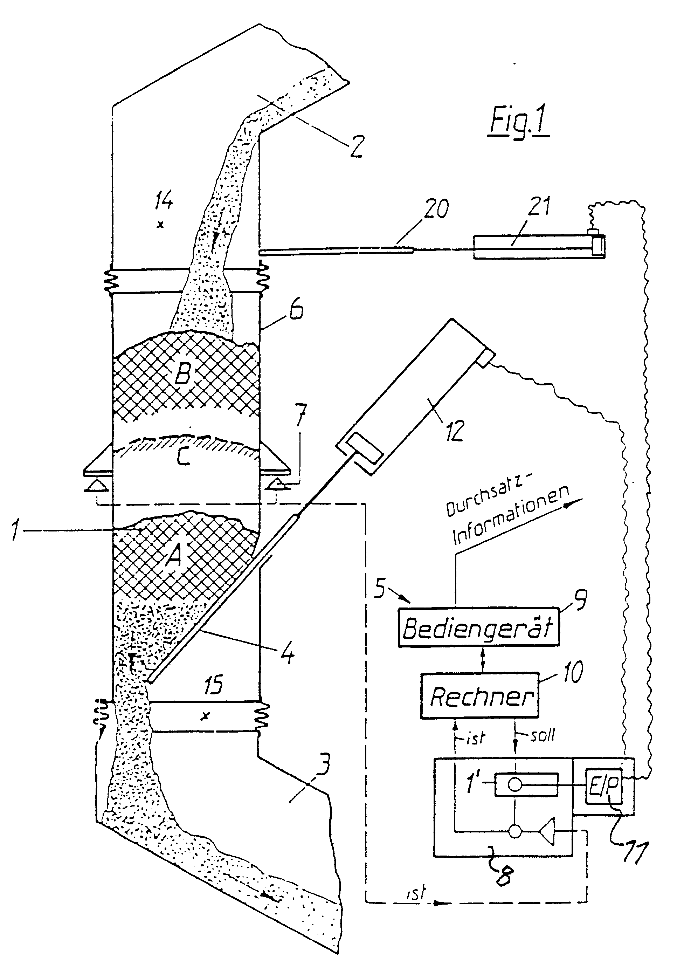

In Figur 1 ist prinzipiell eine Verwägevorrichtung gezeigt, die in ihrem oberen Bereich eine Zuführleitung 2, in ihrem mittleren Bereich eine Rohrwaage 1 und in ihrem unteren Bereich eine Abführleitung 3 aufweist. Die Rohrwaage 1 ist mit einem Schieber bzw. Abschlußschieber 4 versehen, mittels dessen der Auslauf der Rohrwaage 1 verschlossen oder geöffnet werden kann. Des weiteren ist auch noch eine Rechner-Einheit 5 zur Verwertung der von der Verwägeeinrichtung angelieferten Meßsignale vorgesehen.

Der Hauptteil der Waage 1 wird durch ein Wägegefäß bzw. einen Waagenbehälter 6 gebildet, der auf Druckmeßdosen 7 oder auf anderen, zur raschen Erfassung momentaner Gewichtswerte geeigneten Elementen abgestützt ist. Der Waagenbehälter 6 ist bei der gezeichneten Prinzipdarstellung so angeordnet und ausgebildet, daß er einen Teil der Förderleitung selbst darstellt, d. h. er ist mit einem Durchlaufraum versehen, dessen Querschnitt genau dem der Zuführleitung 2 bzw. der Abführleitung 3 entspricht, wobei sich die Wandflächen unmittelbar und ohne Störung des Wandverlaufes aneinander anschließen, als ob Zuführleitung, Durchlaufraum und Abführleitung ein einziges Teil gleichen Querschnitts wären. Hierdurch ist gewährleistet, daß das aus der Zuführleitung 2 ankommende Produkt ohne eine durch den Innenquerschnitt des Waagenbehälters 6 gebildete Störung in die Abführleitung 3 weiterströmen kann.

Die Druckmeßdosen 7 geben das von ihnen erzeugte, dem gemessenen Gewicht entsprechende Signal an einen Umsetzer 8 weiter, der über ein Bedienungsgerät 9 mit einem Rechner 10 verbunden ist. Dabei ist der Umsetzer 8 auch an einen elektro-pneumatischen Wandler 11 angeschlossen; der mit einem pneumatischen Zylinder 12 zur Steuerung des Taktspieles der Waage 1 verbunden ist. Die gezeigte Anordnung ermöglicht ein einfaches elektronisches Erfassen der gemessenen Gewichtswerte sowie deren Weiterleitung an den Rechner 10 zur Berechnung des gewünschten Produktdurchsatzes (Produktmenge pro Zeit). Des weiteren kann ein (in Figur 1 nicht dargestelltes) Druckausgleichsrohr für die Ausschaltung solcher Störfaktoren vorgesehen werden, die dadurch entstehen: daß in der Zuführleitung 2 und der Abführletung 3 unterschiedliche Druckverhältnisse auftreten können. Hierzu verbindet ein Druckausgleichsrohr einen Raum 14 direkt oberhalb des Waagenbehälters 6 mit einem Raum 15 direkt unterhalb desselben in freier, ungestörter Verbindung und unabhängig von der Stellung des Abschlußschiebers 4.

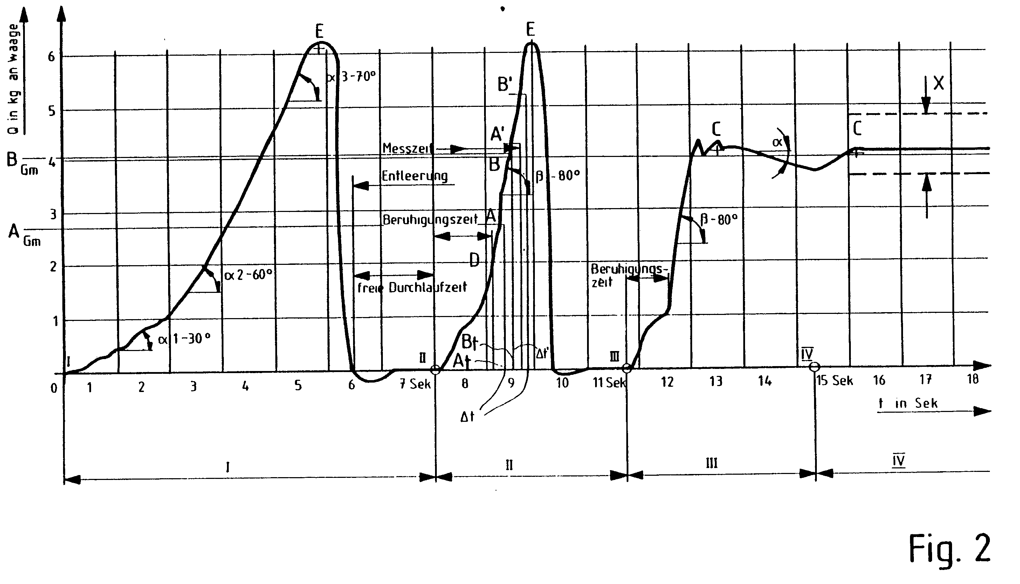

Die Figur 2 zeigt nun beispielsweise vier mögliche Meßzyklen, wie sie bei erstmaligen Produktanläufen, insbesondere bei Produktsorten, die erstmalig erfaßt werden, vorkommen. Weiterhin sind in Figur 2 vier Meßzyklen (erfaßter Durchsatz über der Zeit) dargestellt.

Bei Beginn der Messung wird der Abschlußschieber in die geschlossene Stellung gefahren. Der Waagebehälter beginnt sich zu füllen und erreicht nacheinander die Füllung A und dann B. Der Meßzyklus I zeigt die häufig beobachtete anfängliche Steigerung der Produktspeisung. Im Meßzyklus II dagegen ist eine stabile Einspeisung über der ganzen Meßzeit dargestellt. Der Waagebehälter wird am Ende des Zyklus II wieder vollständig geleert.

Der Meßzyklus III weist zwei Betriebszustände auf. Bis zum Ende der Phase III wird der Waagenbehälter bis zu einer mittleren Füllung C gefüllt und der Abschlußschieber bei der Füllung C soweit geöffnet, daß die Produktmenge in dem Waagebehälter konstant bleibt, wobei der Abschlußschieber in einer entsprechenden Stellung festgehalten wird. Von der Waage nicht weiter ermittelte Störfaktoren ergeben ein langsames Sich-Leeren des Waagebehälters, so daß zu Beginn des Meßzyklusses IV die Schieberstellung etwas mehr geschlossen wird. Im Verlaufe des Meßzyklus IV stabilisiert sich die Gutmenge im Waagenbehälter, was bedeutet, daß einfließende und ausfließende Schüttgutmenge gleich groß sind. Durch entsprechendes, wiederholtes, kurzfristiges Festhalten der Position des Abschlußschiebers und Regeln desselben auf "Einlaufmenge = Ausfließmenge" werden mögliche Störungen, die z. B. außerhalb einer vorgegebenen Bandbreite X liegen, direkt oder einer nachfolgenden Verarbeitungsmaschine angezeigt.

Es wird nun die Figur 2 mit weiteren Einzelheiten erläutert, wobei auf den dargestellten Zyklus II Bezug genommen wird:

Der Verlauf der gemessenen Gewichtszunahme Q in kg ist in Figur 2 über der Zeit t in Sekunden dargestellt. Der Zeitpunkt II

bezeichnet dabei den Schließzeitpunkt des Waagenausganges, d. h. die Vollendung der Schließbewegung des Abschlußschiebers 4. Mit der Schließung des Abschlußschiebers 4 (Zeitpunkt II) beginnt sich nun der Waagenbehälter 6 zu füllen, wobei das erzeugte Wägesignal entsprechend der Kurve vom Ausgangspunkt II zunächst sehr unregelmäßig und mit erkennbaren Überschwingungen ansteigt, weil hier das gesamte Waagensystem durch den ersten Aufprallimpuls in Schwingungen gebracht wird und deshalb überschwingt.

Bei gut ausgebildeter Dämpfung ist jedoch bereits nach kurzer Zeit, im dargestellten Beispiel nach etwa 1 sec., eine Beruhigung eingetreten, die etwa dem Punkt D entspricht. Vom Punkt D an beginnt nun ein linearer Anstieg der gemessenen Werte bis hin zum Punkt E, bei dessen Erreichen der Abschlußschieber geöffnet wird: entsprechend dem nunmehr erfolgenden Auslaufen des Produktes fällt das Gewicht in der Waage I wieder bis zum Nullpunkt ab, wonach sich bei der Waage infolge der auftretenden Trägheitseffekte sogar kurzzeitig ein negatives Gewichtssignal zeigt. Anschließend bleibt der Abschlußschieber während einer gewissen Zeit geöffnet, wonach er wieder geschlossen wird. Nach erfolgter Schließung (erneuter Schließzeitpunkt des Waagenausgangs bzw. beendete Schließbewegung des Abschlußschiebers 4) könnte der Zyklus II beliebig oft wiederholt werden.

Wesentlich für das erstmalige Ermitteln eines konstanten Durchsatzes ist hierbei, daß im Bereich des linearen Meßwertanstiegs, d. h. im Bereich zwischen dem Beruhigungspunkt D und dem Endpunkt des linearen Gewichtsanstiegs E zu Beginn der Schieberöffnung, die für das erfindungsgemäße Verfahren erforderlichen Messungen bei gleichzeitiger Zeiterfassung erfolgen, wobei auf diese Weise sehr genau der momentane Durchsatz und der Beginn einer stabilen Speisung erfaßt wird. Die allererste Messung weist normalerweise noch keinen linearen Kurvenverlauf entsprechend Zyklus I auf.

Der Punkt $A_t$ bei Zyklus II sei nun der dem Meßpunkt A zugeordnete Zeitpunkt, wobei $A_{Gm}$ den hierbei von der Waage gemessene Gewichtsausschlag bezeichnet. $B_t$ bezeichnet die Zeit, die dem Meßpunkt B zugeordnet ist, und $B_{Gm}$ sei der bei Punkt B festgestellte Meßwert für das Gewicht ("Gewichtsausschlag"). Eine Ablesung des Meßwertes während des fortgesetzten Zulaufens von Schüttgut erfaßt stets sowohl das Gewicht, wie auch den Impuls des fallenden Produktstromes gleichzeitig. Daher kann eine solche Einzelmessung niemals das absolute Gewicht des im Waagenbehälters 6 momentan aufgehäuften Schüttgutes darstellen.

Innerhalb des bereits genannten linearen Bereiches der gemessenen Gewichtszunahme erfolgt nun eine Messung, etwa zwischen den Punkten A und B, die über einen nur sehr kurzen Referenzzeitabschnitt $\Delta t$ vorgenommen wird.

Alle bisherigen Messungen und Versuche haben bestätigt, daß die Gewichtsfehlanzeige durch den Impuls (Steigimpuls) genau gleich groß ist wie der entsprechende Wert des jeweiligen Produktnachstromes (beide verändern sich im gleichen Verhältnis bei fortlaufendem Füllen des Behälters bzw. bei Verkleinern der Fallhöhe und damit (entsprechend) des Nachlaufes), so daß sich beide Faktoren gegenseitig aufheben und die Anzeige an der Waage den jeweils momentanen Durchsatz ($\dot{m}$ = sekundlicher Massenstrom) ergibt, wenn zu den jeweiligen Gewichtsänderungen die Zeitänderung berechnet wird.

Somit kann auch bei Anforderung großer Genauigkeit das Differenzgewicht zwischen den Zeitpunkten $A_t$ und $B_t$ als ausreichend genauer Differenzwert verwendet werden.

Bezeichnet man das auf die Zeiteinheit bezogene Gewicht des in die Waage eingeflossenen Schüttgutstromes als "Schüttgutdurchsatz", so ergibt sich dieser aus der Relation zwischen dem ermittelten Differenzwert einerseits und dem Referenzzeitabschnitt andererseits wie folgt, wobei der Quotient $\frac{\Delta G}{\Delta t}$ auch als sekundlicher Massenstrom = $\dot{m}$ der aber als Steigungswinkel $\alpha$ ($\beta$, $\gamma$ usw.) (bzw. tan $\alpha$ ) angegeben werden kann:

$$\frac{B_{Gm} - A_{Gm}}{B_t - A_t} = \frac{\Delta G}{\Delta t} = \tan (\alpha, \beta, \gamma).$$

Hierin bezeichnet
$\Delta G$ das Differenzgewicht und
$\Delta t$ die Dauer des Referenzzeitabschnittes,
$\alpha$, $\beta$, $\gamma$ sind die Steigungswinkel der Meßkurve (Figur 2).

Damit ergibt die Vermessung des Kurvenverlaufes innerhalb des Referenzzeitabschnittes $\Delta t$ eine Kurzzeitmessung, aus der sehr schnell und mit großer Genauigkeit der Wert des momentanen Schüttgutdurchsatzes unschwer festgestellt werden kann. Dabei besteht die Möglichkeit, wie aus Figur 2 ebenfalls ersichtlich ist, daß im Bereich des linearen Meßwertanstiegs zwischen den Punkten D und G nicht nur während eines Referenzzeitabschnittes (Punkte A-B), sondern auch während eines weiteren Referenzzeitabschnittes zwischen den Punkten A' und B' zusätzlich eine gleiche Messung vorgenommen werden kann. Wenn dabei der Referenzzeitabschnitt $\Delta t$ gleich groß wie zwischen den Punkten A und B gewählt wird, kann der Durchsatzwert, der sich aus der zweiten Messung ableiten läßt, mit dem Durchsatzwert aus der Messung während des ersten Referenzzeitabschnittes verglichen und, falls eine Abweichung vorliegt, ein Mittelwert gebildet werden, der dann mit noch größerer Genauigkeit den gemittelten Durchsatz zwischen den Zeitpunkten $A_t$ und $B'_t$ wiedergibt. Bei Einsatz geeigneter Verwägungssysteme besteht keine Schwierigkeit, innerhalb des linearen Meßwertanstiegs zwischen den Punkten D und E eine Vielzahl solcher Einzelmessungen, jeweils über einen identischen Referenzzeitabschnitt Δt ausgeführt, vorzunehmen und nach jeder neuen Messung den vorher bestimmten Durchsatzwert im Rahmen einer erneuten Mittelung zu korrigieren.

Die oben angegebene Messung des Differenzgewichtes ΔG und der Referenzzeitdauer Δt läßt aber über die Berechnung des momentanen Durchsatzwertes hinaus auch noch, falls gewünscht, die Möglichkeit zu, auch die Gesamtfüllung des Waagenbehälters 6 bis zu dessen Entleerung, somit das insgesamt zwischen dem Zeitpunkt II und dem Punkt E in den Waagebehälter 6 eingespeiste Produktgewicht, ebenfalls mit großer Genauigkeit zu ermitteln. Denn dies kann unschwer dadurch erfolgen, daß das innerhalb eines Referenzzeitabschnittes gemessene Differenzgewicht ΔG in geeigneter Weise linear extrapoliert und hochgerechnet wird, so daß die Gewichtsdifferenz zwischen dem Punkt E einerseits und dem Schnittpunkt II der Geraden des linearen Meßwertanstiegs mit der Abzisse (Zeitachse) andererseits berechnet wird: diese Gewichtsdifferenz ist dann eine sehr genaue Erfassung des Gewichtes des wirklich in den Behälter eingeströmten Schüttgutes, was durch Versuchsergebnisse belegt werden konnte. Im Falle, daß zur Meßwerterfassung eine elektronische Waage eingesetzt wird, mit der gleichzeitig eine integrale Auswertung der Meßwertkurve über der Zeit erfolgen kann, besteht sogar die Möglichkeit, daß der durch eine geeignete elektronische Schaltung für die Berechnung des Durchsatzes oder des in den Waagenbehälters eingespeisten Schüttgutgewichts gemessene tatsächliche Kurvenverlauf ersetzt wird durch einen Kurvenverlauf, der aus einer z. B. durch den Punkt E verlaufenden Geraden besteht, bei der das Integral über den Zeitraum, der zwischen ihrem Schnittpunkt mit der Abzisse und dem Punkt E liegt, gleich dem Integral der tatsächlich gemessenen Kurve über dem Zeitraum zwischen den Punkten I und E ist.

Selbstverständlich können der Zyklus I und II auch weggelassen und direkt mit dem Zyklus III begonnen werden. Dabei besteht aber keine genügende Sicherheit, daß die vom Rechner ermittelten Durchsätze mit Waagengenauigkeit stimmen. Die erstmalige Messung dient gleichzeitig einer Eichung für den jeweiligen Betriebszustand bzw. für ein allenfalls noch nicht bekanntes Produkt. Diese Eichung kann nach Bedarf auch während dem Betrieb wiederholt werden, sofern ein kurzzeitiges Unterbrechen des Produktflusses erlaubt ist.

Die Lösung gemäß Figur 1 erlaubt ein konstantes Erfassen des Durchsatzes, wobei der Produktfluß dauernd überwacht werden kann. Bei Eingeben einer genügenden Bandbreite kann mit diesem Ausführungsgedanken auch eine Vergleichmäßigung bzw. eine Verbesserung der Konstanz des Durchsatzes erreicht werden. Schwankungen oder ganz kurzfristige Spitzen des in den Waagebehälter 6 eingespeisten Produktes werden im Waagebehälter aufgefangen. Die unten abgegebene Produktmenge ist über der Zeit stark ausgeglichen, was direkt wieder einen Einfluß hat auf die Genauigkeit der Erfassung des Durchsatzes. In Figur 1 wird der Abschlußschieber 4 durch Meßwerte der Waagensignale gesteuert, wobei aus den Waagensignalen gleichzeitig der Produktdurchsatz ermittelt wird.

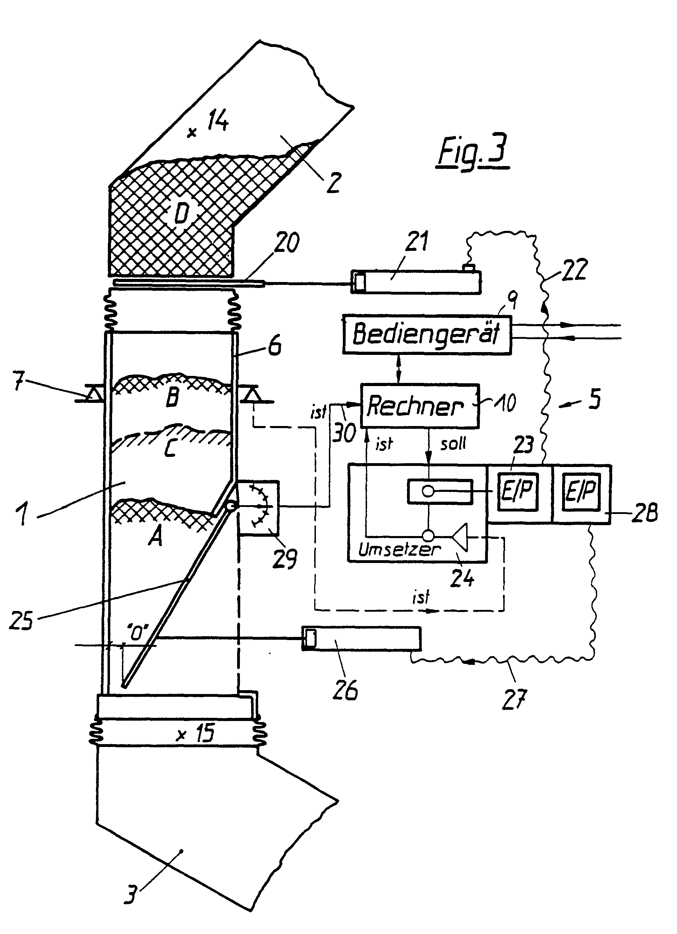

Bei den Darstellungen sowohl der Figur 1, wie auch der Figur 3 ist in der Zuführleitung 2 ein Produktschieber 20 angeordnet, der über einen Pneumatikzylinder 21 betätigt wird. Der Pneumatikzylinder 21 wird in geeigneter Weise angesteuert, etwa - wie in Figur 3 im einzelnen gezeigt - über eine Luftleitung 22 und einen elektro-pneumatischen Wandler 23; der von einem Umsetzer 24 die Korrektursignale erhält.

Für manche Produkte ist es vorteilhaft, anstelle eines Flachschiebers am Auslauf der Rohrwaage eine verschwenkbare Klappe, z. B. eine Pendelklappe 25 zu verwenden, die über elektromotorische Mittel, z. B. einen Stellmotor, oder, wie in Figur 3 gezeigt, mit einem Pneumatikzylinder 26 betätigt wird, der mit Druckluft über eine Steuerleitung 27 und einen elektro-pneumatischen Wandler 28 versorgt und gesteuert wird. Mit der Pendelklappe 25 ist auch eine Positionsanzeige 29 verbunden, die z. B. als Drehpotentiometer ausgebildet sein kann. Das entsprechende elektrische Signal wird über eine Steuerleitung 30, welche die jeweilige Ist-Lage der Pendelklappe 25 feststellt, dem Rechner 10 mitgeteilt.

Die Anordnung gemäß Figur 3 kann gleich wie nach Figur 1 betrieben werden, wobei der Produktschieber 20 als Serviceschieber benutzt werden kann.

Die Anordnung nach Figur 3 erlaubt aber auch noch eine andere Betriebsweise, indem sie als eine Art Differentialwaage betrieben werden kann. Im Gegensatz zu den bekannten Differentialwaagen wird jedoch in jedem Fall im Waagenbehälter 6 ein freier Massenfluß und gleichzeitig ein freier Austritt des Produktes ermöglicht. Damit keine Störfaktoren durch geänderte Reib- und Beschleunigungskräfte das Ergebnis stören, wird die Öffnungsstellung "O" immer so eingeregelt, daß eine Produktmenge A im Waagenbehälter 6 nicht unterschritten wird. Versuche haben gezeigt, daß bei richtiger Formgebung des ganzen Waagenbehälters, insbesondere der Auslaufpartie, ab einer bestimmten Produktmenge A eine Änderung der Füllhöhe im Bereich zwischen A und B auf die Austrittsgeschwindigkeit am Waagenauslaß keinen Einfluß mehr hat, insbesondere wird die Austrittsgeschwindigkeit dort nicht gestört, ob nun Produkt in den Waagebehälter 6 fließt oder nicht.

Je nach Produkt und besonderer Situation kann z. B. in einem Zyklus von 2 Sekunden eine große Menge Produkt, z. B. (Menge B) - (Menge A), in das Waagengefäß 6 bei gleichzeitiger Austragung mit einer vorgegebenen Leistung geschüttet werden. Nach zwei Sekunden wird der Produktschieber 20 vollständig geschlossen und die fortlaufende Austragung des Produktes über der Zeit während acht Sekunden überwacht, geregelt und gemessen, sodann das Spiel wiederholt. Dies hat den Vorteil; daß zumindest während des größeren Zeitabschnittes die ausfließende Produktmenge ungestört mit Waagengenauigkeit erfaßt wird.

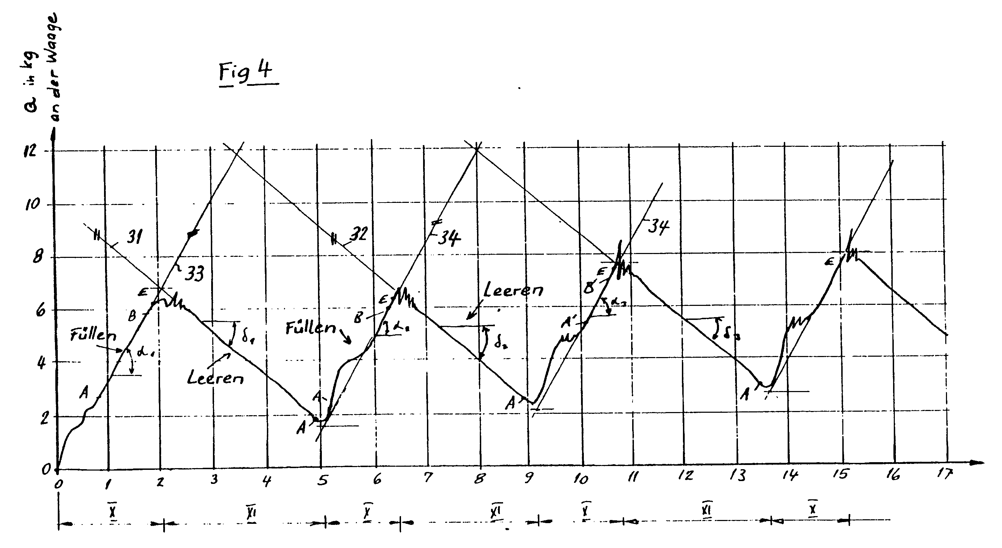

Sofern nun bei der Einspeisung eine gewisse Regelmäßigkeit gegeben ist, können, wie aus der Figur 4 ersichtlich ist, eine Vielzahl von Informationen gewonnen werden.

Der Beginn der Messung kann durch einen Zyklus X erfolgen, entsprechend dem Zyklus II der Figur 2. Der Rechner kann auf diese Weise die in die Waage fließende Produktmenge pro Zeiteinheit bzw. den Durchsatz ($\dot{m}$) erfassen und die Klappe 25 bei Erreichen der Füllhöhe B in eine entsprechende Leistungsstellung öffnen. Gleichzeitig wird der Produktschieber 20 geschlossen, so daß im Zyklus XI fortlaufend die Austragleistung bzw. das über der Zeit abnehmende Behältergewicht festgestellt und daraus der Massenfluß ($\dot{m}$) errechnet wird. Am Ende der Phase des Zyklusses XI wird der Produktschieber 20 wieder geöffnet, so daß anfänglich die darüber aufgestaute Produktmasse in die Waage fällt. Am Waagesignal ist nach einem ersten steilen Anstieg durch einen flacheren Anstieg das normale Nachfließen aus der Zuführleitung 2 feststellbar. Nach Erreichen des Füllstandes B wird der Produktschieber 20 wieder geschlossen und das Spiel der Zyklen XI und X fortgesetzt.

Anstelle des Produktschiebers 20 kann auch eine Speiseschnecke oder eine Schleuse verwendet werden, die eine entsprechende Steuerbarkeit des Produktflusses erlauben.

In der Figur 4 ist nun ferner angenommen, daß der Produktaustrag aus dem Waagebehälter in den zwei Zyklen XI entweder konstant ist oder auf einen konstanten Wert geregelt wird, so daß die zwei Geraden 31 und 32 Parallelen sind. Durch Errechnen der idealisierten "Fühlgeraden" 33 und 34 kann sehr genau auf die jeweilige Einfüllmenge geschlossen werden, obwohl die entsprechenden Werte von der Waage wegen des einfallenden Produktstromes (Fallimpuls) nicht direkt bestimmt werden können. Auf diese Weise kann nach einer Anzahl unveränderter Zyklen XI eine kleine Korrektur für die Austragleistung entsprechend dem Mehr oder Weniger der Speiseleistung in die Zuführleitung 2 eingegeben werden. Dies ist besonders für die Erfassung des Durchsatzes in unmittelbar nachfolgenden Verarbeitungsmaschinen vorteilhaft, da sowohl für die Maschine selbst wie, auch für mögliche weitere Beimischungen nur Regelkorrekturen in größeren Zeitabständen notwendig sind.

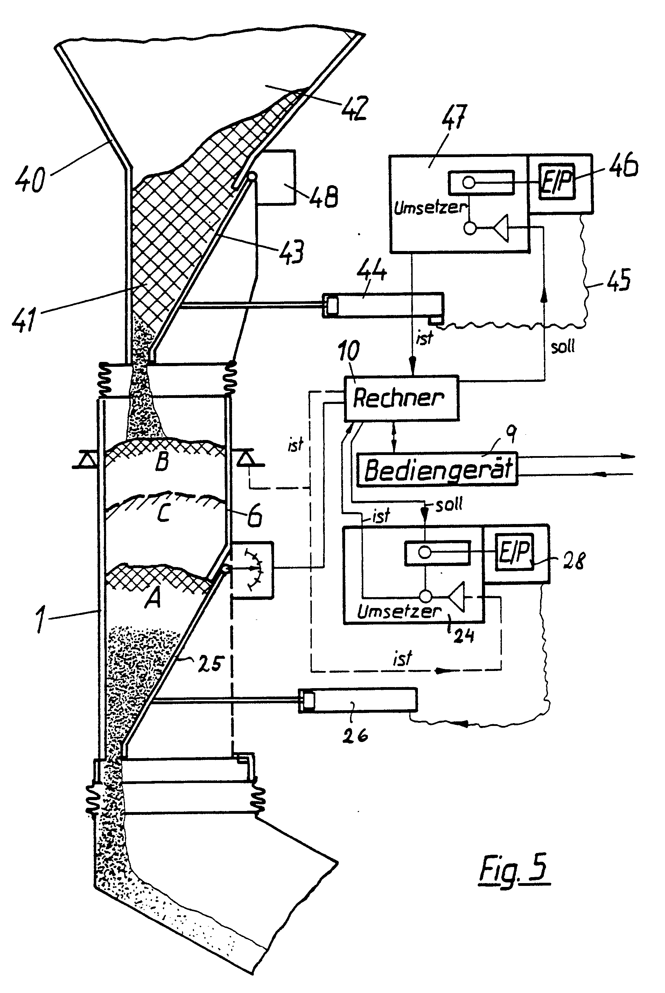

Die Anordnung nach Figur 5 ist in Bezug auf die Produktzuführung unterschiedlich zu den Ausgestaltungen in den Figuren 1 und 3:

In Figur 5 wird das Waagengefäß 6 direkt aus einem Vorratsbunker oder einem Silo 40 gespeist. Die Aufgabe, die hier gestellt ist, liegt in einer optimalen Konstanthaltung eines vorgegebenen Sollwertes. Der Produktdurchsatz soll über eine ganze Verarbeitungsperiode auf Waagengenauigkeit (z. B. ± 0,2 %; ± 0,1 % Genauigkeit) geregelt werden. Die Genauigkeit soll sowohl momentan wie auch als Summe über die Verarbeitungsperiode eingehalten werden.

Über dem Waagebehälter 6 ist das Silo 40 angeordnet, dem ein regelbarer Austragdosierer 41 nachgeschaltet ist. Der Austragdosierer 41 kann entsprechend den Fließeigenschaften des Produktes irgendein bekanntes Dosierelement sein. Bei frei fließfähigen Gütern, wie Getreide, hat es sich als ganz besonders vorteilhaft erwiesen, nicht nur die untere Silo- bzw. Behälterpartie 42, wie an sich bekannt, als freien Massenflußsilo zu dimensionieren, sondern auch das Austragdosierelement als freien Massenflußdosierer mit freiem Produktaustritt zu gestalten, wie dies in der Figur 5 dargestellt ist. Der Austragdosierer hat hierbei die Funktion eines Grobdosierers und weist auf einer Seite eine Regelklappe 43 auf, die über einen Pneumatikzylinder 44 oder eine entsprechende Membrane betätigt wird. Die Druckluftsignale werden von einem elektro-pneumatischen Wandler 46 über eine Druckluftleitung 45 übertragen. Der Rechner 10 gibt an einen Umsetzer 47 die erforderlichen Vorgabe-Sollwerte, die über einen Positionsmelder 48 für eine erste Grobeinstellung verwendet werden. Während des Betriebes können nun die Korrekturbefehle für den Grobdosierer so gewählt werden, daß die Schwankungsbreite zwischen den Füllhöhen A und B im Waagebehälter 6 voll ausgenutzt wird.

Die Bauweise gemäß Figur 5 erlaubt ferner eine Direktregelung des Austragdosierers 41, indem das Maß der Gewichtszunahme über der Zeit, von einer Einfüllmenge A beginnend, dauernd festgestellt und ein entsprechendes Stellsignal durch den Rechner 10 sowie über den Umsetzer 47 an den Pneumatikzylinder 44 gegeben wird. Dabei bildet sich eine Kurve B entsprechend Zyklus I in Figur 2 aus. Reicht eine Behälterfüllung für das genaue Auffinden der Solldosierleistung nicht, wird auch dieser Vorgang, wie in Figur 2, wiederholt. Dabei ergibt sich ein sinngemäßer Zyklus III zwischen der elften Sekunde und dreizehnten Sekunde. Bei der dreizehnten Sekunde wird die Pendelklappe 25 soweit geöffnet, bis konstantes Gewicht im Waagenbehälter 6 entsteht. Die entsprechende Klappenstellung wird nun gehalten. Durch den freien Massenfluß bleibt die Austragsleistung aus dem Waagenbehälter 6 mit Waagengenauigkeit konstant, und die Füllmenge im Waagenbehälter 6 wird durch die Grobdosierklappe 43, wie weiter oben beschrieben, durch ein entsprechendes Sollsignal aus dem Rechner 10 geregelt.

Im Rechner 10 können aber auch beliebige Programme für die produktabhängige Öffnungsstellungen in Bezug auf einen gewünschten Soll-Durchsatz eingegeben werden, wobei die Leistung über der Zeit vorteilhafterweise einer quadratischen Funktion entspricht. Wird die Durchlaufwaage nicht senkrecht, sondern in leichter Schräglage eingebaut, so können ebenfalls im Rechner 70 entsprechende Istwert-Korrekturprogramme vorgesehen werden.

Aufgrund der vorstehenden Ausführungen ist ersichtlich, daß der Rechner 10 in jeder geeigneten Art programmiert werden kann, daß je nach Erfordernis folgende Daten eingegeben oder in beliebiger Kombination genommen werden können:

- der momentane Durchsatz;
- die Totalisierung der Produktmenge, z. B. auf eine Zyklusdauer von zehn Sekunden;
- die Totalisierung der Produktmenge bezogen "auf eine/mehrere Stunden;
- jeweils ein Festgewicht-Impuls, d. h. eine effektive (errechnete) Zeitangabe, wann ein vorgegebenes Produktgewicht, z. B. 50 kg, durchgeflossen sind, und/oder
- eine bestimmte Verarbeitungsmenge, etwa von 50 t.

Bis heute war es nicht möglich, mit einem System die entsprechenden Daten mit Waagengenauigkeit und bei konstantem Produktfluß zu erhalten, da, wie eingangs erwähnt, Chargenwaagen zwar sehr genau arbeiten, aber jeweils nur eine bestimmte Menge von z. B. 50 kg plötzlich ausschütten. Alle Systeme mit Prallplatten erreichen die geforderten Genauigkeiten nicht. Bandwaagen sind wirtschaftlich in sehr vielen Fällen nicht tragbar und erreichen die Genauigkeit nur bei sehr hohen Aufwendungen bezüglich der Wartung.

Zur Berechnung und Dimensionierung des Waagengefäßes 6 bzw. der unteren Silopartie 42 sowie der Pendel-/Regelklappe 25/43 bzw. dem Abschlußschiebers 4 zur Erzeugung eines freien Massenstromes läßt sich z. B. das Jenike-Verfahren benützen.

1954 entwickelte A. W. Jenike (siehe Bulletin No. 64 of the Utah Engineering Experiment Station, University of Utah, 1954, sowie Bulletin No. 123 of the Utah Engineering Experiment Station, University of Utah, 1964) eine experimentelle Testmethode zur Ermittlung der maßgeblichen Stoffgrößen (innere Reibungswinkel der Schüttgüter sowie Reibungswerte der Schüttguter gegenüber verschiedenen Wandmaterialien etc.), mit deren Kenntnis Auslaufformen und Austrittsgrößen für Behälterausläufe ermittelt werden können, die einen störungsfreien Massenfluß unter Schwerkraftwirkung garantieren.

In einem Schergerät werden dazu entsprechende Schüttgutmuster gemessen. Das Kernstück des Gerätes besteht aus einer aus der Bodenmechanik bekannten Scherzelle, in der Schüttgutproben mit verschiedenen Normallasten verdichtet und unter diesen Verdichtungszuständen abgeschert werden. Die graphische Auswertung der Meßresultate zusammen mit von Jenike gegebenen Berechnungen höherer Differentialgleichungen ermöglichen zu jeder Schüttgut/Wandmaterial-Paarung die Angabe der jeweils notwendigen Neigungen der Schrägflächen sowie die minimalen Auslaufabmessungen, damit Massenfluß garantiert ist.

Bei mechanischen Austragelementen, die den Bodenbereich des Wägegefäßes verschlossen halten bzw. ganz abdecken, ergeben die verschiedenen Bewegungen (Rotation, Oszillation, Pulsieren usw.) Störeinflüsse auf das jeweilige momentane Wägeergebnis. Allerdings treten keine Gewichtsdifferenzen infolge unterschiedlicher Öffnungsgrade der Austragsquerschnitte auf, da bei mechanischen Austragelementen der sich infolge des Druckes auf den Boden bzw. die Gefäßwände ergebende Gewichtswert dadurch nicht direkt beeinflußt wird.

Im Unterschied hierzu ist z. B. bei einer Flüssigkeitenverwägung und bei teilweise freiem Bodenauslaß eine entsprechende Verkleinerung der wirksamen Bodenfläche bei der Bestimmung des Gewichtswertes zu berücksichtigen.

Versuche haben nun gezeigt, daß nochmals ganz andere Verhältnisse bezüglich der momentanen Gewichtsanzeigen bei unterschiedlicher Freigabe der projezierten Grundfläche des Wägegefäßes bei Schüttgütern bestehen, da Schüttgut ein völlig anderes Verhalten als Flüssigkeiten aufweist. Das Schüttgut wird im Gegensatz zur Flüssigkeit als reibungsbehaftet bezeichnet, wodurch insbesondere Spannungsumlagerungen während des Austrags im Auslaufbereich stattfinden. Es stellen sich hierdurch somit konstante Verhältnisse ein, die durch Eichung erfaßbar und hierdurch mit sehr großer Genauigkeit reproduzierbare Werte jeder Messung erzielbar sind.

## Patentansprüche

1. Schüttgutdurchlaufwaage zum automatischen Erfassen eines kontinuierlichen Schüttgutdurchsatzes mit
  a) einem Wägegefäß (6),
  b) einem im Auslaufbereich des Wägegefäßes (6) angeordneten und mit ihm verbundenen Verschlußorgan (4; 25),
  c) einer Steuereinrichtung (5), mittels welcher das Verschlußorgan (4; 25) in eine das Wägegefäß (6) verschließende und in eine Offenstellung bringbar ist und
  d) an das Wägegefäß (6) angeschlossenen Gewichts- oder Gewichtsdifferenz-Erfassungsmitteln (7), dadurch gekennzeichnet, daß

e) die Steuereinrichtung (5) und das Verschlußorgan (4; 25) derart ausgebildet und angeordnet sind, daß das Verschlußorgan (4; 25) in den Austrittsquerschnitt des Auslaufbereiches des Wägegefäßes (6) bestimmende Arbeitsstellungen bringbar ist, in welchen sich ein kontinuierlicher Schüttgutstrom in Form eines Massenflusses innerhalb des Wägegefäßes (6) aufrechterhalten läßt.

2. Schüttgutdurchlaufwaage nach Anspruch 1, dadurch gekennzeichnet, daß das Verschlußorgan ein Wandteil des Wägegefäßes (6) ist und als Schieber (4) oder verschwenkbare Klappe ausgebildet ist.

3. Schüttgutdurchlaufwaage nach einem der vorstehenden Ansprüche, dadurch gekennzeichnet, daß zwischen dem Verschlußorgan (4; 25) und den ihm gegenüberliegenden Wandteilen des Wägegefäßes (6) für den Betrieb der Schüttgutdurchlaufwaage ein Öffnungswinkel zwischen 0° und 40°, bevorzugt von 20° bis 35°, einstellbar ist.

4. Schüttgutdurchlaufwaage nach einem der vorstehenden Ansprüche, dadurch gekennzeichnet, daß dem Verschlußorgan (25) Verstellmittel (26) sowie Positions-Anzeigemittel (29) zugeordnet sind.

5. Schüttgutdurchlaufwaage nach einem der vorstehenden Ansprüche, dadurch gekennzeichnet, daß das Wägegefäß (6) einem Zuführleitungsabschnitt (2) und dem Wägegefäß (6) ein Abfuhrleitungsabschnitt (3) jeweils im Abstand nachgeordnet sind und die beiden Abschnitte und das Wägegefäß im wesentlichen querschnittsgleich ausgestaltet und nach Art einer Förderleitung zueinander ausgerichtet sind.

6. Schüttgutdurchlaufwaage nach einem der vorstehenden Ansprüche, dadurch gekennzeichnet, daß vor dem Zuführleitungsabschnitt (2) ein Dosierorgan (20, 21) angeordnet und das Dosierorgan (20, 21) von der Schüttgutdurchlaufwaage steuerbar ist.

7. Schüttgutdurchlaufwaage nach einem der vorstehenden Ansprüche, dadurch gekennzeichnet, daß sich das Wägegefäß (6) auf elektronischen Gewichts- oder Gewichtsdifferenz-Erfassungsmitteln (7) abstützt.

8. Schüttgutdurchlaufwaage nach einem der vorstehenden Ansprüche, dadurch gekennzeichnet, daß der Zuführleitungsabschnitt (2) und der Abführleitungsabschnitt (3) über ein Druckausgleichsrohr frei miteinander verbunden sind.

9. Verfahren zum automatischen Erfassen eines Schüttgutdurchsatzes mittels einer Schüttgutdurchlaufwaage, die ein an Gewichts- oder Gewichtsdifferenz-Erfassungsmittel (7) angeschlossenes Wägegefäß (6), ein im Auslaufbereich des Wägegefäßes (6) angeordnetes und mit ihm verbundenes Verschlussorgan (4; 25) und eine Steuereinrichtung (5) zur Steuerung der Arbeitsstellung des Verschlußorganes (4; 25) aufweist, dadurch gekennzeichnet, daß im Wägegefäß (6) ein kontinuierlicher Schüttgutstrom in Form eines Massenflusses aufrechterhalten und dabei Gewichte oder Gewichtsdifferenzen gemessen werden.

10. Verfahren nach Anspruch 9, dadurch gekennzeichnet, daß aus den Meßwerten ein Signal zur Erfassung eines Zustandsparameters des Schüttgutstromes abgeleitet wird.

11. Verfahren nach Anspruch 10, dadurch gekennzeichnet, daß das Signal zur Steuerung der Produktzufuhr zum Wägegefäß (6) verwendet wird.

12. Verfahren nach einem der Ansprüche 9 bis 11, dadurch gekennzeichnet, daß die dem Wägegefäß (6) zulaufende Schüttgutmenge zu Kontrollzwecken in Zeitabständen unterbrochen und die Gewichtsabnahme des Waageninhaltes zum Ermitteln der pro Zeiteinheit ausfließenden Schüttgutmenge verwendet wird.

13. Verfahren nach einem der Ansprüche 9 bis 12, dadurch gekennzeichnet, daß zum Ausgleich kurzfristiger Schwankungen der dem Wägegefäß (6) zulaufenden Schüttgutmenge das Wägegefäß (6) als Ausgleichsgefäß verwendet wird.

14. Verfahren nach Anspruch 10 oder einem darauf rückbezogenen Anspruch, dadurch gekennzeichnet, daß das Signal zur Regelung eines zweiten Gutstromes oder einer mit dem ersten Schüttgut zu mischenden Flüssigkomponente verwendet wird.

15. Verfahren nach Anspruch 10 oder einem darauf rückbezogenen Anspruch, dadurch gekennzeichnet, daß das Signal zur Steuerung einer nachfolgenden Verarbeitungsmaschine verwendet wird.

16. Verfahren nach einem der Ansprüche 9 bis 15, dadurch gekennzeichnet, daß kurzzeitig der Massenfluß im Wägegefäß (6) durch Schließen von dessen Austrittsöffnung desselben gestoppt und dabei die zeitliche Zunahme des Gewichtes der in das Wägegefäß (6) einlaufenden Schüttgutmenge ermittelt wird.

17. Verfahren nach einem der Ansprüche 9 bis 16, dadurch gekennzeichnet, daß kurzzeitig der Massenfluß durch das Wägegefäß (6) in einem zweiten Wägegefäß aufgefangen und in diesem die Gewichtszunahme des zufließenden Produktstromes pro Zeiteinheit festgestellt und aus den Meßwerten und den Meßwerten des zweiten Wägegefäßes die dem ersten Wägegefäß (6) zulaufende Schüttgutmenge berechnet wird.

**Claims**

1. Continuous bulk material weigher for the automatic detection of a continuous throughput of bulk material, having
a) a weighing container (6),
b) a shut-off member (4; 25) arranged in the discharge region of the weighing container (6) and connected to it,

c) a control device (5) by means of which the shut-off (4; 25) can be brought into a position closing the weighing container (6) and into an open position, and

d) weight detecting or weight-difference detecting means (7), connected to the weighing container (6), characterized in that

e) the control device (5) and the shut-off member (4; 25) are designed and arranged in such a way that the shut-off member (4; 25) can be brought into the working positions determining the outlet cross-section of the discharge region of the weighing container (6) in which a continuous stream of bulk material in the form of a mass flow can be maintained within the weighing container (6).

2. Continuous bulk material weigher according to claim 1, characterized in that the shut-off member is a wall part of the weighing container (6) and is designed as a slide (4) or a hinged flap.

3. Continuous bulk material weigher according to one of the preceding claims, characterized in that, for the operation of the continous bulk material weigher, an opening angle between 0° and 40° and preferably from 20° to 35°, can be set between the shut-off member (4; 25) and the wall parts opposite it of the weighing container (6).

4. Continuous bulk material weigher according to one of the preceding claims, characterized in that the shut-off member (25) is assigned adjusting means (26) and position-indicating means (29).

5. Continuous bulk material weigher according to one of the preceding claims, characterized in that the weighing container (6) is connected downstream of a feed-line section (2) and a discharge-line section (3) is connected downstream of the weighing container (6), in each case at a distance, and the two sections and the weighing container are designed as substantially of the same cross-section and are mutually aligned in the manner of a delivery line.

6. Continuous bulk material according to one of the preceding claims, characterized in that a metering member (20, 21) is arranged upstream of the feed-line section (2) and the metering member (20, 21) can be controlled by the continuous bulk material weigher.

7. Continuous bulk material weigher according to one of the preceding claims, characterized in that the weighing container (6) is supported on electronic weight detecting or weight-difference detecting means (7).

8. Continuous bulk material weigher according to one of the preceding claims, characterized in that the feedline section (2) and the discharge-line section (3) are connected freely to each other wia a pressure-equalizing pipe.

9. Process for the automatic detection of a throughput of bulk material by means of a continuous bulk material weigher, which has a weighing container (6), which is connected to weight detecting or weight-difference detecting means (7), a shut-off member (4; 25), arranged in the discharge region of the weighting container (6) and connected to it, and a control dewice (5) for controlling the working position of the shut-off member (4; 25), characterized in that a continuous bulk material stream in the form of a mass flow is maintained in the weighing container (6) and weights or differences in weight are thereby measured.

10. Process according to claim 9, characterized in that a signal for detecting a state parameter of the bulk material stream is derived from the measured values.

11. Process according to claim 10, characterized in that the signal is used for controlling the product feed to the weighing container (6).

12. Process according to Claims 9 to 11, characterized in that the quantity of bulk material being fed to the weighing container (6) is interrupted at time intervals for checking purposes and the reduction in weight of the weigher contents is used for determining the quantity of bulk material flowing out per unit of time.

13. Process according to one of claims 9 to 12, characterized in that the weighing container (6) is used as a compensating container to compensate for brief fluctuations in the quantity of bulk material being fed to the weighing container (6).

14. Process according to claim 10 or a related claim, characterized in that the signal is used for controlling a second material stream or a liquid component to be mixed with the first bulk material.

15. Process according to claim 10 or a related claim, characterized in that the signal is used for controlling a downstream processing machine.

16. Process according to one of claims 10 to 15, characterized in that the mass flow in the weighing container (6) is briefly stopped by closing its outlet opening and the increase over time in the weight of the quantity of bulk material running into the weighing container (6) is thereby determined.

17. Process according to one of claims 9 to 16, characterized in that the mass flow through the weighing container (6) is briefly collected in a second weighing container and in the latter the increase in weight of the inflowing product stream per unit of time is determined and the measured values and the measured values of the the second weighing container are used to calculate the quantity of bulk material being fed to the first weighing container (6).

**Revendications**

1. Balance continue pour matériaux en vrac pour la détection automatique d'un débit continu de matériaux en vrac, comprenant:

a) une cuve de pesage (6),

b) un organe d'obturation (4; 25) disposé dans la zone de sortie de cette cuve de pesage (6) et solidaire de celle-ci,

c) un dispositif de commande (5) à l'aide duquel cet organe d'obturation (4; 25) peut être amené dans une position obturant la cuve de pesage (6) et dans une position d'ouverture et

d) des moyens de détection de poids ou de différence de poids (7) reliés à la cuve de pesage (6), caractérisée en ce que

e) le dispositif de commande (5) et l'organe d'obturation (4; 25) sont agencés et disposés de façon telle que l'organe d'obturation (4; 25) peut être amené dans des positions de travail qui déterminent la section transversale de sortie de la zone de sortie de la cuve de pesage (6) et dans lesquelles un courant continu de matériaux en vrac s'entretient à l'intérieur de la cuve de pesage (6) sous la forme d'un flux de masse.

2. Balance continue pour matériaux en vrac suivant la revendication 1, caractérisée en ce que l'organe d'obturation est constitué par une partie de paroi de la cuve de pesage (6) et se présente sous la forme d'un tiroir (4) ou d'un volet pouvant basculer.

3. Balance continue pour matériaux en vrac suivant l'une des revendications précédentes, caractérisée en ce que, entre l'organe d'obturation (4; 25) et les parties de paroi de la cuve de pesage (6) qui lui font face, un angle d'ouverture réglable est ménagé, pour le fonctionnement de cette balance continue pour matériaux en vrac, entre 0° et 40°, de préférence de 20 à 35°.

4. Balance continue pour matériaux en vrac, suivant l'une des revendications précédentes, caractérisée en ce que des moyens de réglage (26), ainsi que des moyens indicateurs de position (29), sont associés à l'organe obturateur (25).

5. Balance continue pour matériaux en vrac, suivant l'une des revendications précédentes, caractérisée en ce que la cuve de pesage (6) est disposée en aval d'un tronçon de conduite d'amenée (2) et avec un certain espacement par rapport à celle-ci, tandis qu'un tronçon de conduite d'évacuation (3) est disposé en aval de cette cuve de pesage (6) et avec un certain espacement par rapport à celle-ci, et en ce que ces deux tronçons et la cuve de pesage sont réalisés sensiblement avec la même section transversale et sont alignés entre eux à la façon d'une conduite de transfert.

6. Balance continue pour matériaux en vrac, suivant l'une des revendications précédentes, caractérisée en ce qu'un organe de dosage (20, 21) est disposé avant le tronçon de conduite d'amenée (2) et en ce que cet organe de dosage (20, 21) peut être commandé par la balance continue pour matériaux en vrac.

7. Balance continue pour matériaux en vrac, suivant l'une des revendications précédentes, caractérisée en ce que la cuve de pesage (6) prend appui sur des moyens électroniques de détection de poids ou de différence de poids.

8. Balance continue pour matériaux en vrac, suivant l'une des revendications précédentes, caractérisée en ce que le tronçon de conduite d'amenée (2) et le tronçon de conduite d'évacuation (3) communiquent librement l'un avec l'autre par l'intermédiaire d'une tuyauterie d'équilibrage de pression.

9. Procédé de détection automatique d'un débit de matériaux en vrac à l'aide d'une balance continue, qui comprend une cuve de pesage (6) reliée à un moyen (7) de détection de poids ou de différence de poids, un organe d'obturation (4; 25) disposé dans la zone de sortie de cette cuve de pesage (6) et solidaire de celle-ci et un dispositif de commande (5) destiné à commander la position de travail de cet organe d'obturation (4; 25), caractérisé en ce qu'on maintient un écoulement continu de matériaux en vrac dans la cuve de pesage (6) sous la forme d'un flux de masse et on mesure à cette occasion des poids ou des différences de poids.

10. Procédé suivant la revendication 9, caractérisé en ce qu'on déduit des valeurs mesurées un signal permettant de déterminer un paramètre de l'état dans lequel se trouve l'écoulement de matériaux en vrac.

11. Procédé suivant la revendication 10, caractérisé en ce qu'on utilise le signal pour commander l'acheminement de produits vers la cuve de pesage (6).

12. Procédé suivant l'une des revendications 9 à 11, caractérisé en ce que, à des fins de contrôle, on interrompt à certains intervalles de temps le débit de matériaux en vrac se dirigeant vers la cuve de pesage (6) et on utilise la diminution du poids du contenu de la balance pour déterminer la quantité de matériaux en vrac qui sort par unité de temps.

13. Procédé suivant l'une des revendications 9 à 12, caractérisé en ce que, en vue de compenser des écarts de courte durée de la quantité de matériaux en vrac amenée à la cuve de pesage (6), on utilise cette cuve de pesage (6) en tant que cuve de compensation.

14. Procédé suivant la revendication 10 ou l'une des revendications qui y sont rattachées, caractérisé en ce qu'on utilise le signal pour assurer la régulation d'un second écoulement de matière ou d'un composant fluide à mélanger à la première matière en vrac.

15. Procédé suivant la revendication 10 ou une revendication qui y est rattachée, caractérisé en ce qu'on utilise le signal pour commander une machine de traitement disposée à la suite.

16. Procédé suivant l'une des revendications 9 à 15, caractérisé en ce qu'on interrompt brièvement le flux de masse dans la cuve de pesage (6) en obturant l'ouverture de sortie de celle-ci et en déterminant à cette occasion l'augmentation temporaire du poids de la quantité de matière en vrac qui pénètre dans cette cuve de pesage (6).

17. Procédé suivant l'une des revendications 9 à 16, caractérisé en ce que le flux de masse traversant la cuve de pesage (6) est recueilli temporairement dans une seconde cuve de pesage et en ce qu'on détermine dans celle-ci l'augmentation de poids, par unité de temps, du courant de produit s'écoulant et, à partir des valeurs de mesure et des valeurs de mesure de la seconde cuve de pesage, on calcule la quantité de matière en vrac parvenant à la première cuve de pesage (6).

_Fig.1_

Durchsatz-
Informationen

Bediengerät

Rechner

ist        soll

E/P

ist

Fig. 2

_Fig.3_

Fig 4

Fig. 5